# EUROPÄISCHE PATENTANMELDUNG

(11) **EP 4 455 981 A1**
(43) Veröffentlichungstag der Anmeldung: **30.10.2024**
(21) Anmeldenummer: 24172606.6
(22) Anmeldetag: 26.04.2024
(51) Int. Cl.: G06Q 50/10, G06Q 50/163, G08B 25/00, G08B 21/02

(54) **FITNESSSTUDIO MIT EINER FERNBETREUUNGSZENTRALE**

(30) Priorität: 28.04.2023 DE 102023111128
(71) Anmelder: ProLiving Systems AG, 8580 Amriswil (CH)
(72) Erfinder: Latzke, Gert, 9426 Lutzenberg AR (CH)
(74) Vertreter: Patentanwälte und Rechtsanwalt Weiß, Arat & Partner mbB

(57) **Zusammenfassung**

Vorliegende Erfindung betrifft ein System für einen Betreuungsbereich, insbesondere ein Fitnessstudio zum Betrieb an durch Benutzer schwach frequentierten Öffnungszeiten und/oder bei Abwesenheit von Betreuungspersonal, wobei eine Fernbetreuungszentrale eingerichtet ist, von welcher aus eine Betreuungsperson das Fitnessstudios und/oder weitere Fitnessstudios steuert, überwacht und die anwesenden Personen bei Ihren Tätigkeiten in den Fitnessstudios betreut.

## Beschreibung

### Technisches Gebiet

Die Erfindung betrifft ein System für einen Betreuungsbereich, insbesondere einem Fitnessstudio nach dem Oberbegriff des Anspruchs 1.

### Stand der Technik

Derartige Systeme für Fitnessstudios sind bereits in vielfältiger Form und Ausgestaltung bekannt und gebräuchlich. Es existieren zahlreiche Ausführungen von Fitnessstudios, wobei die Bandbreite von privat geführten und individuell eingerichteten kleinen Fitnessstudios bis hin zu großen Fitnessstudio-Ketten reicht, bei denen an zahlreichen Standorten die gleichen Trainingsgeräte, das gleich Design und die gleiche persönliche Trainingsunterstützung und Betreuung durch angestelltes Personal erfolgt.

Seit Jahren steigt das Interesse an Fitnessstudios. Immer mehr Menschen nehmen Angebote von Fitnessstudios wahr. Gleichzeitig steigen die Ansprüche, welche Benutzer an ein Fitnessstudio richten, zum Beispiel bezüglich der Verfügbarkeit, der Ausstattung, den Öffnungszeiten und der Betreuung.

In diesem Zusammenhang wird beispielsweise auf das Gatekeeper-System von GymMaster hingewiesen, welches mittels RFID-Chip den Zugang zu einem Fitnessstudio zulässt und den erfolgten Zugang und Ausgang der Kunden auch in einer Software vermerkt, auf die der Betreiber des Fitnessstudios online zugreifen kann.

Weiter wird auf die KR 10 2017 0 123 427 A hingewiesen, die sich auf ein Smart Center Management System bezieht, wobei das System eine Bake umfasst, die an mindestens einer Position innerhalb eines Fitnessstudios installiert ist, um mit einem persönlichen Benutzerendgerät zu kommunizieren.

Daneben wird auf die US 2007/0033069 A1 hingewiesen. Dort wird ein System offenbart, welches ein Datenterminal aufweist, das operativ mit einem Trainingsgerät gekoppelt ist. Das Datenterminal ist so konfiguriert, dass es Fitnessinformationen, die einem Fitnessmitglied zugeordnet sind, von dem Trainingsgerät erhält. Zusätzlich ist ein persönlicher digitaler Assistent vorgesehen, der drahtlos über ein Netzwerk mit dem Datenterminal verbunden ist, wobei das Datenterminal so konfiguriert ist, dass es eine Nachricht an den persönlichen digitalen Assistenten auf der Grundlage der Fitnessinformationen übermitteln kann, worauf wieder ein Fitness-Trainer Zugriff hat und auch mit dem Fitnessmitglied über den digitalen Assistenten kommunizieren kann, wobei es sich bei dem digitalen Assistenten um ein Smartphone oder dergleichen handelt oder spezielle Eingabe-Geräte in dem Fitness-Studio.

Auch wird auf die inzwischen üblich gewordenen Remote-Services und Control Center Solutions hingewiesen.

Im Zuge dessen hat sich auch die Wettbewerbssituation deutlich verschärft. Dies liegt unter anderem an der Zunahme von auf dem Markt aktiven Wettbewerbern, den steigenden Personalkosten, den steigenden Betriebskosten, aber auch am marktbedingten Sinken der im Durchschnitt zu entrichtenden Abo-Gebühren für die Benutzung eines Fitnessstudios.

Weiterhin ist bei den Benutzern von Fitnessstudios der Bedarf nach längeren Öffnungszeiten von Fitnessstudios zu erkennen. Dies betrifft Öffnungszeiten in den frühen Morgenstunden, aber auch mittags oder in den späten Abend und in die Nacht hinein.

Problematisch dabei sind vor allem die Verfügbarkeit und die hohen Personalkosten von Personal insbesondere in den auszuweitenden und in der Regel nur schwach frequentierten Öffnungszeiten am frühen Morgen und spät abends und nachts.

Die für einen täglichen 20 bis 24 stündigen Betrieb eines Fitnessstudios aufzuwendenden Kosten sind unter den o.g. wettbewerblichen Gegebenheiten kaum bis überhaupt nicht zu bewältigen, ohne dass das Betreuungsniveau oder andere Bereiche, wie etwa die Qualität, die Erkennung von Notfallsituationen oder die Verfügbarkeit der Sportgeräte darunter leiden.

### Aufgabe der Erfindung

Die Aufgabe der vorliegenden Erfindung ist es, die Nachteile aus dem Stand der Technik zu überwinden. Es soll ein Fitnessstudio bereitgestellt werden, bei dem insbesondere zu schwach frequentierten Öffnungszeiten, wie am frühen Morgen, mittags oder am späten Abend und nachts, aber auch im Normalbetrieb, die Aufgaben eines oder mehrerer ansonsten vor Ort im Fitnessstudio anwesenden Fitnesstrainers übernommen und ersetzt werden, so dass die gewünschten ausgeweiteten Öffnungszeiten unter wettbewerblichen Aspekten ermöglicht werden können. Nachteile im Betreuungsservice für die jeweiligen Benutzer des Fitnessstudios, sollen dabei nicht erfolgen.

### Lösung der Aufgabe

Zur Lösung der Aufgabe führen die Merkmale nach dem Anspruch 1.

Vorteilhafte Ausgestaltungen sind in den Unteransprüchen beschrieben.

Vorliegende Erfindung betrifft ein System für einen Betreuungsbereich, ionsbesondere ein Fitnessstudio zum Betrieb bei Abwesenheit von Betreuungspersonal und/oder zur Unterstützung von Betreuungspersonal. Der Betreuungsbereich kann wie hier im Einzelnen beschrieben ein Fitnessstudio sein. Es ist aber auch möglich und explizit miteinbezogen, dass es sich beispielsweise um einen Selbstbedienungskassenbereich handeln kann. Durhc den Einsatz des Systems im Selbstbedienungskassenbereich sinken die Diebstähle signifikant. Daneben sind auch weitere Outdoor- oder Indoor-Einsatzbereiche als Betreuungsbereiche möglich.

Dies kann an durch Benutzer schwach frequentierten Öffnungszeiten sein, aber auch im Normalbetrieb und/oder bei Abwesenheit von Betreuungspersonal im Fitnessstudio vor Ort.

Das erfindungsgemässe System für Fitnessstudios zeichnen sich dadurch aus, dass sie an eine Fernbetreuungszentrale über das Internet angeschlossen sind. Von einer solchen Fernbetreuungszentrale aus ist eine Betreuungsperson (folgend Livecoach genannt) dazu in der Lage, das Fitnessstudio und/oder weitere Fitnessstudios zu steuern, zu überwachen und die anwesenden Personen bei Ihren Tätigkeiten in dem Fitnessstudio oder den weiteren Fitnessstudios zu betreuen.

Nach dem erfindungsgemässen System ist jedes Fitnessstudio mit einer Fernbetreuungszentrale verbunden. Die Fernbetreuungszentrale ist bevorzugt in einem abgetrennten Raum eingerichtet. Dieser Raum kann an ein Fitnessstudio angrenzen, oder in dieses integriert sein, kann aber auch an einem gänzlich anderen Standort vorgesehen sein.

Eine Fernbetreuungszentrale kann zahlreiche Fitnessstudios betreuen, wobei mit betreuen die Steuerung, Überwachung und Kommunikation mit den Benutzern gemeint ist.

Wesentlich ist, dass die Fernbetreuungszentrale nach dem System immer mit den Fitnessstudios über das Internet verbunden ist.

Die Fernbetreuungszentrale ist insbesondere zu schwach frequentierten Öffnungszeiten, aber auch im Normalbetrieb und/oder bei Abwesenheit von Betreuungspersonal im Fitnessstudios von einer Betreuungsperson, dem so genannten Livecoach besetzt.

Natürlich kann die Fernbetreuungszentrale auch besetzt sein, wenn in dem Fitnessstudio ein Trainer physisch anwesend ist. In diesen Fällen ist die Fernbetreuungszentrale mit dem Livecoach eine zusätzliche Unterstützung.

Ein Livecoach ist eine ausgebildete Fachkraft für ein Fitnessstudio, beispielsweise ein Fitnesstrainer oder ein Sport- und Fitnesskaufmann, welcher mit der Führung eines Fitnessstudios und auch einer entsprechenden Fernbetreuungszentrale vertraut ist.

Mit anwesenden Personen oder Benutzern sind vorliegend Personen gemeint die in dem Fitnessstudio trainieren oder im Zusammenhang mit einer abzuschließenden oder zu beendenden Mitgliedschaft, einem Gesundheitscheck oder anderen formalen oder das Training betreffenden Fragen, von einem Livecoach in einer Fernbetreuungszentrale beraten und unterstützt werden.

Alle Fitnessstudios sind über ihre jeweiligen Fernbetreuungszentralen miteinander über das Internet verbunden.

Die Fernbetreuungszentrale der Fitnessstudios beinhaltet drei Bereiche. Diese drei Bereiche sind ein Überwachungsbereich, einen Steuerbereich und einen Kommunikationsbereich. Alle drei Bereiche werden von dem Livecoach in der Fernbetreuungszentrale mittels einer Software und entsprechender Hardware bedient und gesteuert.

Zu der Hardware in der Fernbetreuungszentrale gehören Bildschirme, Rechner, Tastaturen, Computermäuse, Touchpads, Lautsprecher, Kopfhörer, Headsets, Mikrofone und weitere zur Datenverarbeitung und Kommunikation notwendige und nützliche Hardware. Dabei ist in der Fernbetreuungszentrale ein Arbeitsplatz mit einem Schreibtisch und einem Schreibtischstuhl vorhanden.

Für den ersten Bereich, den Überwachungsbereich der Fernbetreuungszentrale, sind Bildschirme, vorzugsweise eine ganze Bildschirmwand, bestehend aus zahlreichen Bildschirmen, beispielsweise sechs, acht oder mehr nebeneinander an einer Wand angeordnete Bildschirme, vorhanden. Diese Bildschirme sind mit Videokameras in den Fitnessstudios verbunden, wobei Live-Videobeobachtungen in allen verbundenen Fitnessstudios erfolgen und in den der oder den Fernbetreuungszentrale(n) an der Bildschirmwand angezeigt werden. Jede Bildschirmwand wird dabei Videoübertragungen eines einzigen Fitnessstudios zeigen, wobei mehrere Bildschirmwände für mehrere Fitnessstudios in einer einzigen Fernbetreuungszentrale angeordnet sein können.

Die Videokameras sind in den Fitnessstudios bezüglich ihrer Anzahl und Ausrichtung derart positioniert, dass jeder öffentliche Bereich abgedeckt ist. Es sind daher zahlreiche Kameras angeordnet. Mit dem öffentlichen Bereich ist der Bereich gemeint, in dem sich die Trainingsgeräte befinden und in dem das Training und die Beratung der Benutzer erfolgt. Die Umkleidebereiche und sanitären Anlagen, sowie Bereiche die nur für Mitarbeiter zugänglich sind, sind von der Kameraüberwachung natürlich ausgeschlossen.

Die Kameras sind von dem Livecoach von der Fernbetreuungszentrale aus steuerbar, also schwenkbar. Es gibt auch Kameras, die nicht schwenkbar sind und nur eine Zoomfunktion aufweisen. Die hochauflösende Videoqualität erlaubt es dem Livecoach in der Fernbetreuungszentrale auch einzelne Teilbereiche, beispielsweise einen an einem Trainingsgerät trainierenden Benutzer heran zu zoomen und vergrößert darzustellen. Dies erlaubt ihm, dass er in der Fernbetreuungszentrale schnell und einfach erkennt, wenn das Trainingsgerät von einem Benutzer beispielsweise falsch oder dem vorgesehenen individuellen Trainingsprogramm unangemessen benutzt wird. Hier kann der Livecoach dann über eine Lautsprecheransage gezielt, unterstützend und korrigierend eingreifen.

Zudem können Kameras mit folgenden Funktionen vorhanden sein, wobei eine Bewegungserkennung und Klassifizierung von Personen erfolgen soll, ein Videomanipulationsalarm vorhanden ist, eine Linienüberschreitungserkennung integriert ist, eine Einbruchserkennung angeordnet ist, eine Bereichseingangserkennung und eine Bereichsausgangserkennung zur Unterstützung der Alarmauslösung durch bestimmte Zieltypen wie Menschen umfasst ist sowie eine Szenenwechselerkennung.

Zudem sollen die Kameras Audio aufnehmen können und Daten auf NAS/Speicherkarte/FTP und Cloud hochladen können. Ferner soll eine Benachrichtigung an eine Fernbetreuungszentrale erfolgen können. Aufnahmen sollen selbständig ausgelöst werden und per E-Mail an eine Fernbetreuungszentrale oder Überwachungszentrale übersendet werden können. Weiterhin sollen die Kameras akustische Warnungen abgeben können, und die Fähigkeit zur Gesichtserkennung aufweisen. Zudem sollen die Kameras schwenk- bzw. drehbar sein.

Bei den Live-Videobeobachtungen erfolgt durch die Software zudem eine automatische Erkennung von Bewegung in den Räumen der Fitnessstudios. Diese Bewegungen werden dann bei der Darstellung auf den Bildschirmen in der Fernbetreuungszentrale durch die Software optisch gekennzeichnet und hervorgehoben. Dies erleichtert dem Livecoach in der Fernbetreuungszentrale die Überwachung der zahlreichen Bildschirme und der dort gezeigten Kamerabilder, da er durch diese Kennzeichnung sofort erkennt, auf welche Kamerabilder er sich zu konzentrieren hat. Diese Überwachung und Kontrolle verbessert die Übersicht des Livecoachs in der Fernbetreuungszentrale enorm und erhöht die Betreuungsqualität in den Fitnessstudios für die Benutzer.

Nach Wunsch kann eine Aufzeichnung und Speicherung der jeweiligen Live-Videobeobachtungen erfolgen. Dies dient zur Qualitätskontrolle, hilft bei Nachbesprechungen erkannte Probleme in Zukunft besser zu lösen und Notfallsituationen dafür zu dokumentieren, aber auch dazu Auszubildende besser an die Arbeit in einer Fernbetreuungszentrale des Fitnessstudios anzulernen.

Der zweite Bereich, der Steuerbereich der Fernbetreuungszentrale, erlaubt es dem Livecoach im Fitnessstudio vor Ort, aber auch in den anderen Fitnessstudios, den Zugang am Eingang/Ausgang für Benutzer und Personal freizugeben oder zu blockieren.

Zudem ist vorgesehen, dass Benutzer und Personal über eine Zugangsberechtigung Einlass in das Fitnessstudio erhalten. Dazu sind Drehkreuze, Personenschranken, automatische Türen oder dergleichen, vorgesehen. Weiterhin sind dabei alle gängigen Zugangssysteme vorgesehen. Beispielsweise Zugang per Pin-code, mit Chipkarten, mit Schlüsselkarten oder Chip-Armbändern etc..

Es sind aber auch optische Schlüssel, beispielsweise QR-codes oder Strichcodes, welche über eine App, eine E-Mail oder dergleichen auf einem Smartphone oder einem Tablett zur Verfügung gestellt werden, als automatische Zugangsverifizierung möglich.

Es kann sogar vorgesehen sein, dass der Zugang für einen Benutzer über eine automatische Gesichtserkennung mittels einer am Eingang angeordneten Kamera erfolgt, wobei automatisch bestimmte Merkmale eines Gesichts eines Benutzers erkannt werden, wodurch dann der Zugang gewehrt, oder verwehrt wird.

Der Livecoach in der Fernbetreuungszentrale ist nach dem Vorbild eines Smart-Home-Systems dazu in der Lage über den Steuerbereich und mittels der Software alle technischen Belange in den jeweiligen Fitnessstudios zu steuern und zu regeln. Dies betrifft beispielsweise die Beleuchtung, die Heizungs- und Klimaanlagen, die Belüftung, und Alarm- und Sicherheitssysteme, aber auch Türsteuerungen, Garagenzugangssteuerungen, Fahrstuhlsteuerungen oder Rampensteuerungen.

Zudem können über den Steuerbereich auch die Trainings- und Spotgeräte ein- und ausgeschaltet werden. Es kann auch vorgesehen sein, dass der Livecoach auf die jeweilige Trainings- und Spotgeräte-Steuerung zugreifen und diese regeln kann. Dies erlaubt dem Livecoach beispielsweise, dass er ein individuelles Trainingsprogramm für den jeweiligen Benutzer einstellen und auch während des Trainings anpassen kann.

Ferner erlaubt der Steuerbereich die Steuerung, Regelung und Überwachung aller weiteren technischen Komponenten des jeweiligen Fitnessstudios. Dazu gehören auch das Abspielen von Musik und Live-Durchsagen. Zudem können vorgenommene Durchsagen auch automatisch und zeitgesteuert abgespielt werden. Zudem ist beispielsweise auch die Steuerung von Rollläden oder Jalousien bei ungünstigem und für die Benutzer störenden Sonnenstand möglich, wobei auch manuelle und automatisierte Bedingung vorgesehen sind.

Über den Steuerbereich ist der Livecoach in der Lage auf zahlreiche andere Fitnessstudios zuzugreifen, wobei er dabei die gleichen Kommunikations-, Steuer- und Überwachungsmöglichkeiten hat. Dies ermöglicht, dass ein Livecoach mehrere Fitnessstudios gleichzeitig von einer Fernbetreuungszentrale aus steuern, überwachen und die dortigen Benutzer betreuen kann.

Der Kommunikationsbereich ist der dritte Bereich der Fernbetreuungszentrale des Fitnessstudios. Der Kommunikationsbereich erlaubt dem Livecoach die Kommunikation in Echtzeit über Bild und Ton mit einem beliebigen Benutzer in einem der Fitnessstudios.

Die Kommunikation mit den jeweiligen Benutzern wird zudem dadurch erleichtert, da die Software in Kommunikationsbereich dem Livecoach anzeigt, welche Benutzer sich gerade in welchem Fitnessstudio befinden. Dabei wird dem Livecoach das individuelle Benutzerprofil eines im Fitnessstudio anwesenden Benutzers angezeigt.

Dieses individuelle Benutzerprofil zeigt dem Livecoach über die Software in der Fernbetreuungszentrale nicht nur die Anwesenheit des jeweiligen Benutzers an, es können von den Livecoachs zudem weitere trainingsbezogene und formale Informationen über den Benutzer abgerufen und auch eingetragen werden.

Es kann auch vorgesehen sein, dass körperliche Daten der Benutzer beim Training, wie Puls oder Sauerstoffsättigung dem Livecoach angezeigt werden, wenn sie von dem Trainingsgerät erfasst werden können. Zudem können auch direkt am Körper des Benutzers getragene Smart-Watches, Fitnessarmband o.ä. diese Daten an die Fernbetreuungszentrale übertragen, wenn der Benutzer dies gestattet hat.

Auf diese Weise ist jeder Livecoach in einer Fernbetreuungszentrale dazu in der Lage jeden Benutzer an jedem Standort eines Fitnessstudios optimal zu betreuen und auf den jeweiligen Trainingsstand und die aktuelle Trainingssituation vor Ort in bestmöglicher Weise unterstützend zu reagieren.

Natürlich ist es auch möglich, dass ein Benutzer auf sein individuelles Profil selbst zugreifen kann, wobei er ein Profilbild speichern oder ändern kann und in begrenzter Weise auch Eintragungen, beispielsweise zum eigenen Trainingsstand anlegen kann.

Es kann auch vorgesehen sein, dass einzelne Benutzer über diese Funktion untereinander kommunizieren können. Beispielsweise um sich für ein Training zu verabreden und die Trainingserfolge dann vergleichen zu können.

Weiterhin ist denkbar, dass ein Belohnungssystem mit dem Profil eines jeden Benutzers verbunden ist, wobei beispielsweise Rangstufen für regelmäßiges Training oder bestimmte Trainingserfolge vergeben werden, die dann in dem Profil angezeigt werden können.

Auch die jeweiligen Livecoachs verfügen über ein eigenes Profil, über welches sich die Benutzer an sie wenden können und umgekehrt.

Zudem ist natürlich auch die Kommunikation zwischen einzelnen oder mehreren Livecoachs in den jeweiligen Fernbetreuungszentralen der Fitnessstudios möglich. Dies erlaubt und vereinfacht organisatorische Planungen und Absprachen, aber auch die Abstimmung bezüglich einzelner Benutzer und ihrer individuellen Trainingsprogramme.

Nach dem erfindungsgemässen System erfolgt die Kommunikation zwischen Livecoach und Benutzer über ein Kommunikationsterminal im Fitnessstudio.

Dabei bildet das Kommunikationsterminal einen wichtigen Schwerpunkt im erfindungsgemässen System.

Das Kommunikationsterminal ist bevorzugt wie eine ca. 2m hohe Stele ausgebildet und weist einen Bildschirm mit Touch-Funktion, Lautsprecher, Mikrofone und eine Kamera auf. Auf diese Weise kann sich der jeweilige Livecoach aus der Fernbetreuungszentrale bei Anfrage oder Bedarf direkt auf den Bildschirm schalten und mit dem Benutzer über Telefonie oder Videotelefonie kommunizieren. Dies bedeutet erfindungsgemäss beispielsweise, dass das Kommunikationsterminal eingerichtet ist, eine Kommunikation mit einem Livecoach herzustellen.

Auch der Umstand, dass es sich bei dem Kommunikationsterminal um eine ca. 2 m hohe Stele handelt hat den angenehmen Effekt, dass die jeweiligen Benutzer des Fitnessstudios immer den Eindruck haben, dass der Livecoach quasi körperlich anwesend ist.

Auf diese Weise können Fragen des Benutzers schnell und einfach geklärt werden. Dabei handelt es sich nicht nur um Fragen zu Sportübungen oder dergleichen, sondern auch einfache oder alltägliche Fragen, wie die Einstellung der Heizung, der Belüftung, der Beleuchtung, des Zutritts zum Fitnessstudio oder auch dem Beitritt zum Fitnessstudio.

Für den Beitritt zum Fitnessstudio kann der Livecoach dem Interessenten beispielsweise Vertragsdokumente auf den Bildschirm projizieren, Rückfragen direkt beantworten und auch die Unterschrift des Interessenten auf über Touchpad erhalten. Dadurch erhält der Interessent oder Nutzer alle notwenigen Informationen an dem Kommunikationsterminal.

Der Livecoach kann beispielsweise über das Kommunikationsterminal auch gleichzeitig als Empfang des Fitnessstudios eingesetzt werden. Dazu ist das Kommunikationsterminal in einem Eingangsbereich des Fitnessstudios angeordnet. Der Eingangsbereich ist je nach Situation im Fitnessstudio entweder vor und/oder nach einer Zugangsstelle definiert. Sollten Mitglieder des Fitnessstudios beispielsweise nicht eingelassen werden, können sie mit dem Livecoach sofort kommunizieren und entsprechende Fragen klären. Es ist aber auch möglich, dass jemand keinen Zugang hat, weil er noch nicht Mitglied im Fitnessstudio ist. Dann kann der Livecoach die jeweilige Person für einen Probetag einlassen, da er auch Zugriff auf den Zugang hat.

Es sind auch mehrere Kommunikationsterminals in dem selben Fitnessstudio oder in mehreren Fitnessstudios anordnebar, wobei auch mehrere Kommunikationsterminals und mit der selben Fernbetreuungszentrale (10) verbunden sind.

Zusätzlich kann die Kommunikation mit dem Livecoach auch über ein privates Smartphone, Tablett oder sonstiges kommunikationsfähiges Gerät eines Benutzers, wie beispielsweise eine Smart-Watch, ein Head-up-Display, eine VR-Headset, eine VR-Brille, ein AR-Headset oder eine AR-Brille erfolgen.

Weiterhin kann der Livecoach in der Fernbetreuungszentrale auch über die in den Fitnessstudios verbauten Lautsprecher Anweisungen und/oder Hinweise an einen oder mehrere Benutzer richten.

Dazu sind zahlreiche Bildschirme in den Fitnessstudios angeordnet, auf welchen sich der Livecoach den Benutzern zeigen kann.

Dabei kann der Livecoach einzelne Bildschirme direkt ansteuern, wobei er dann beispielsweise den Bildschirm auswählt, der einem Benutzer, mit dem er kommunizieren will, am nächsten ist.

Es ist vorgesehen, dass, wenn nicht andere Inhalte auf den Bildschirmen gezeigt werden, der Livecoach permanent gezeigt wird. Dadurch kann der Benutzer im Fitnessstudio erkennen, dass eine Betreuungsperson ständig ansprechbar ist. Der Livecoach soll auch dann auf den Bildschirmen sichtbar sein, wenn er beispielsweise gerade mit einem bestimmten Benutzer kommuniziert, wobei dann natürlich nur das Bild zu sehen ist, aber nicht bei allen Bildschirmen auch der Ton zu dem individuellen Gespräch mit dem Benutzer wiedergeben wird.

Prinzipiell sollen aber alle möglichen Steuerung zur Wiedergabe von Ton und Bild möglich sein, wobei alle oder nur ein Teil oder auch nur ein Bildschirm angesteuert werden können.

Natürlich können auf den Bildschirmen während der Zeit in der die zuständige(n) Fernbetreuungszentrale(n) nicht besetzt sein sollte, auch andere Inhalte dargestellt werden, wie beispielsweise Informationsvideos zum richtigen Bedienen der einzelnen Sportgeräte, Informationen zu Sonderveranstaltungen und den Öffnungszeiten, oder Werbung und Unterhaltung.

Weiterhin sind in den Fitnessstudios Kommunikationsterminals angeordnet. Kommunikationsterminals sind Terminals, welche zur Kommunikation mit einem Livecoach dienen und einen Empfang und eine dortige Person ersetzen können. Kommunikationsterminals sind daher vorzugsweise im Eingangsbereich, teilweise auch vor einer Einlasskontrolle des Fitnessstudios angeordnet, so dass auch Nicht-Mitglieder mit einem Livecoach interagieren können.

Die Kommunikationsterminals weisen einen Bildschirm mit Touchfunktion, Lautsprecher, Mikrofone und einer Kamera auf. Zudem kann vorgesehen sein, dass die Kommunikationsterminals auch mit den von den Benutzern getragenen AR-Brillen/Geräten direkt vernetzt werden und die Kommunikation darüber erfolgt.

An diesen Kommunikationsterminals kann ein Benutzer direkt mit einem Livecoach in einer Fernbetreuungszentrale kommunizieren, wobei er alle formalen Angelegenheiten rund um eine Mitgliedschaft, aber auch Gesundheitschecks oder andere Belange, wie die Anmeldung zu einem Probetraining, behandeln kann. An den Kommunikationsterminals kann ein Benutzer auch auf sein Benutzerprofil zugreifen. Es ist auch vorgesehen, dass an den Kommunikationsterminals bargeldloser Zahlungsverkehr möglich ist. Zudem ist es möglich über den Touchscreen des Kommunikationsterminals Verträge direkt mit den Benutzern mittels Unterschrift abzuschließen.

Weiterhin ist in den Fitnessstudios vorgesehen, dass dort anwesende Benutzer mit einem Smartphone, Tablett oder einem anderen entsprechenden Gerät einen dort platzierten QR-Code auslesen können. Über diesen QR-Code wird eine Anruffunktion in einer Web-App geöffnet, die nicht auf dem benutzten Gerät zu installieren ist.

Diese Anruffunktion erlaubt es dem Benutzer mit einem verfügbaren Livecoach in einer Fernbetreuungszentrale zu kommunizieren. Dies kann wahlweise über das jeweilige Benutzerprofil, oder auch ohne die Benutzung eines Benutzerprofils erfolgen.

Ferner können auch mehrere Livecoachs aus unterschiedlichen Fernbetreuungszentralen in dem Fitnessstudio für die Benutzer digital präsent sein, sollte dies gewünscht werden.

Weiterhin weist die Software, welche die drei o.g. Bereiche, den Überwachungsbereich, den Steuerbereich und den Kommunikationsbereich anwendungsorientiert für den Livecoach darstellt und bedienbar macht, weitere Funktionen auf.

Die Software weist eine Notruffunktion auf, über diese Notruffunktion können Rettungskräfte der Feuerwehr, des medizinischen Notdienstes, aber auch die Polizei oder andere Sicherheitsdienste kontaktiert und benachrichtigt werden. Dabei wird automatisch sichergestellt, dass die zum dem entsprechenden Notfall und dem entsprechenden Fitnessstudio räumlich nächsten Kräfte kontaktiert werden.

Auch sind sogenannte Notruftasten in den Fitnessstudios an mehreren gut erreichbaren Positionen angeordnet, an denen Benutzer selbst einen Notruf bei den räumlich naheliegenden Sicherheitsdiensten und/oder Notdiensten auslösen können. Diese Alarmmeldungen werden natürlich auch in den Fernbetreuungszentralen den Livecoachs angezeigt.

Die Software, die den Livecoachs in den Fernbetreuungszentralen zur Verfügung steht, visualisiert alle o.g. Bereiche, den Überwachungsbereich, den Steuerbereich und den Kommunikationsbereich und erlaubt eine intuitive Bedienung und Steuerung der einzelnen Vorgänge.

Dabei werden dem Livecoach angezeigt, welche weiteren Fernbetreuungszentralen der Fitnessstudios online sind und welche anderen Livecoachs in den jeweiligen anderen Fernbetreuungszentralen angemeldet sind.

Natürlich sind insbesondere zu den Stoßzeiten in den Fitnessstudios Livecoachs auch direkt bei den Benutzern im Fitnessbereich bei den Sportgeräten und stehen dort den Benutzern direkt unterstützend und anleitend zur Verfügung.

Ferner wird dem Livecoach in der Fernbetreuungszentrale angezeigt, welche Kommunikationsterminals wo online sind, was auf den Bildschirmen im Fitnessbereich des angewählten Fitnessstudios angezeigt wird und wieviel und welche Benutzer und Livecoachs in welchen Fitnessstudios eingecheckt sind, da ja erfasst wird, welche Benutzer und Livecodes sich in welchem Fitnessstudio befinden.

Weiterhin sind in der Software automatische und vorprogrammierte Durchsagen gespeichert, die je nach Wunsch und Situation von dem Livecoach in einem jeweiligen Fitnessstudio über die Lautsprecher abgespielt werden können. Dies können beispielsweise Informationen, Sicherheits- oder Wahrhinweise, aber auch der Hinweis auf eine bevorstehende Schließung sein.

Zudem wird den jeweiligen Livecoachs angezeigt, welche Hardware, also Geräte oder andere technische Einrichtungen in welchem Fitnessstudio online und somit steuerbar sind und in welchem Zustand sie sich befinden.

So wird beispielsweise von der Software angezeigt, wie der Status der Eingangstüren in einem jeweiligen Fitnessstudio sind, welche Lampen ein- und welche Lampen ausgeschaltet sind und welche anderen steuerbaren Geräte und Anlagen welchen Wert bzw. Zustand aufweisen.

Durch die Steuerbarkeit der technischen Einrichtungen in jedem Fitnessstudio von jeder Fernbetreuungszentrale aus ergibt sich ein enormes Einsparpotential insbesondere zu Zeiten, an denen nur wenige Benutzer das Fitnessstudio besuchen. Zudem ist die Sicherheit der Benutzer dadurch zu jederzeit gewährleistet.

Zudem können Abläufe vereinfacht werden. Aber es ermöglicht auch die gegenseitige Kontrolle durch die zuständigen Livecoachs, so dass Fehler und Probleme verhindert bzw. frühzeitig erkannt werden können.

Als zusätzliche Sicherheitsvorrichtung, für den Fall, dass das Internet ausfallen sollte, oder aus anderen Gründen keine Verbindung zwischen einer Fernbetreuungszentrale und einem Fitnessstudio hergestellt werden kann, sind in den Fitnessstudios Speicher und Software hinterlegt. Diese jeweiligen lokalen Speicher und Software erlauben die vollständige Steuerung und Bedienung der in den Fitnessstudio angeordneten Hardware, Geräten, Sportgeräten und Einlasskontrollen bis hin zum Abspielen von gespeicherten Playlisten für die Musik, vor Ort.

Es kann auch vorgesehen sein, dass die Fernbetreuungszentrale ein Laptop, ein Tablet oder ein anderer mobiler Rechner mit Anzeigevorrichtung und der o.g. Software ist, von dem aus alle Funktionen einer räumlich eingerichteten Fernbetreuungszentrale erfüllt werden können.

Zudem ist vorgesehen, dass die Software der Fernbetreuungszentrale Zugriff auf personenbezogene Daten von Benutzern in den Fitnessstudios mittels Schnittstelle von deren Geräten ausliest und der Betreuungsperson anzeigt. Dies bedeutet, dass Daten von beispielsweise Smartwaches, Smartphones oder dergleichen Geräte die von den Benutzern beim Training im Fitnessstudio getragen werden, abgerufen werden können.

Ferne ist vorgesehen, dass auch solche personenbezogenen Daten von Trainings- und Sportgeräten, sowie von entsprechenden Apps auf entsprechenden Geräten abgerufen werden können.

Die verbessert die personenbezogene Trainingsunterstützung des Benutzers durch den Livecoach enorm.

Es ist klar, dass das Vorbild des Fitnessstudio mit einer Fernbetreuungszentrale auch auf andere, ähnliche Einrichtungen, die von Benutzern frequentiert werden, übertragen werden kann. So ist beispielsweise denkbar, dass Sonnenstudios, Spielhallen und Kasinos, der Empfang und die Rezeption von Hotels, Self-Storage, Einzelhandels Shop-In-Shop (POS) oder der Gymnastikbereich von physiotherapeutischen Einrichten über ein entspreche Fernbetreuungszentrale gesteuert werden, wobei ebenfalls eine Betreuung der Benutzer durch einen Livecoach von der Fernbetreuungszentrale aus erfolgt. Hier ist die Liste der potentiellen Anwendungsbereiche nahezu endlos.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:

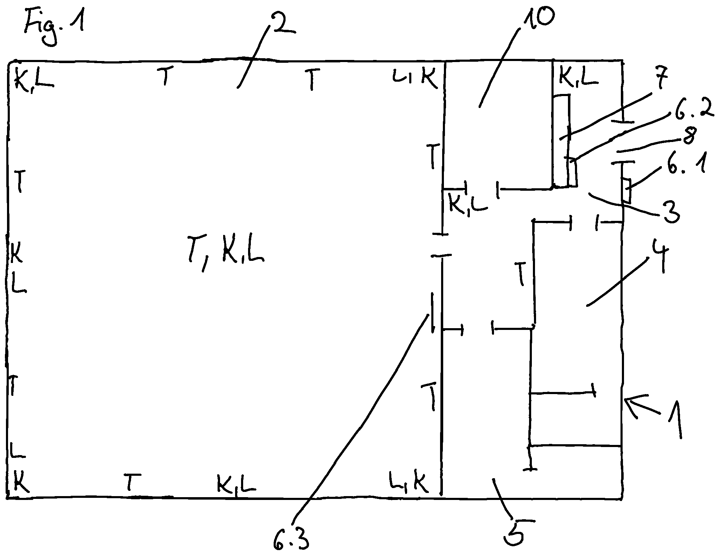

- Figur 1: eine schematische Ansicht eines Fitnessstudios 1.

### Ausführungsbeispiel

In Figur 1 ist in einer schematischen Darstellung eines Fitnessstudio 1 als Übersichtsplan dargestellt.

Das Fitnessstudio 1 weist in vorliegendem Ausführungsbeispiel einen Trainingsraum 2 auf. Dieser Trainingsraum 2 beinhaltet die Trainings- und Sportgeräte, die üblicherweise in einem Fitnessstudio für Benutzer zur Verfügung gestellt werden.

Weiterhin ist ein Eingangsbereich 3 angeordnet. Dieser Eingangsbereich 3 weist einen Eingang/Ausgang 8 auf. Über den Eingangsbereich 3 können Benutzer des Fitnessstudios 1 in eine Damenumkleide 4, eine Herrenumkleide 5, in den Trainingsraum 2 und Livecoachs in eine Fernbetreuungszentrale 10 gelangen. Weiterhin befindet sich im Eingangsbereich ein Empfang 7 mit einer Rezeption.

In diesem Ausführungsbeispiel ist die Fernbetreuungszentrale an das Fitnessstudio räumlich angegliedert.

Der Trainingsraum 5 weist Bildschirme T, Kameras K und Lautsprecher L auf, welche an unterschiedlichen Positionen im Trainingsraum 2 verteilt sind.

Zudem sind Kommunikationsterminals 6.1, 6.2, 6.3 vor dem Eingang/Ausgang 8, im Eingangsbereich 3 und im Trainingsraum 2 angeordnet.

Bezugnehmend auf die Figuren 1 erklärt sich die Funktionsweise des Fitnessstudios 1 folgendermassen:
Durch das Fitnessstudio 1 ist es möglich einen Betrieb zu insbesondere schwach frequentierten Öffnungszeiten, wie nachts und am frühen Morgen für Benutzer in voller Qualität zur Verfügung zu stellen, da nur wenige Livecoachs in Ihren jeweiligen Fernbetreuungszentralen 10 anwesend sein müssen, um die Trainer vor Ort in den Fitnessstudios zu ersetzen.

Beispielsweise ist ein Livecoach in einer Fernbetreuungszentrale 10 um 3 Uhr morgens dazu in der Lage mehrere Fitnessstudios 1 die sich an anderen Standorten befinden zu führen und zu betreiben. Die dem Livecoach in der Fernbetreuungszentrale zur Verfügung stehende Soft- und Hardware mit den drei Bereichen, einem Überwachungsbereich, einen Steuerbereich und einen Kommunikationsbereich erlauben es ihm das jeweilige Fitnessstudio zu betreiben, die Benutzer zu überwachen und mit ihnen zu kommunizieren und sie so zu betreuen.

### Bezugszeichenliste

| | |
|---|---|
| 1 | Fitnessstudio |
| 2 | Trainingsraum |
| 3 | Eingangsbereich |
| K | Kamera |
| L | Lautsprecher |
| T | Bildschirm |
| 4 | Damenumkleide |
| 5 | Herrenumkleide |
| 6.1, 6.2, 6.3 | Kommunikationsterminal |
| 7 | Empfang |
| 8 | Eingang/Ausgang |
| 10 | Fernbetreuungszentrale |

## Patentansprüche

1. System für einen Betreuungsbereich, insbesondere eines Fitnessstudios (1),
**dadurch gekennzeichnet,**
**dass** eine Fernbetreuungszentrale (10) eingerichtet ist, von welcher aus eine Betreuungsperson das Fitnessstudio und/oder weitere Fitnessstudios steuert, überwacht und die anwesenden Personen bei Ihren Tätigkeiten in den Fitnessstudios (1) betreut, wobei die Fernbetreuungszentrale (10) einen Überwachungsbereich, einen Steuerbereich und einen Kommunikationsbereich aufweist, welche mittels einer Software bedient und gesteuert werden, wobei der Überwachungsbereich der Fernbetreuungszentrale (10) Bildschirme aufweist, die mit Videokameras (K) in den betriebenen Fitnessstudios verbunden sind, wobei Live-Videobeobachtungen in allen verbundenen Fitnessstudios (1) erfolgen, wobei eine automatische Erkennung von Bewegung und deren optische Kennzeichnung und Hervorhebung bei der Darstellung auf den Bildschirmen erfolgt und wobei nach Wunsch eine Aufzeichnung und Speicherung der live-Videobeobachtungen erfolgt, wobei
der Steuerbereich der Fernbetreuungszentrale (10) es der Betreuungsperson erlaubt in einem oder mehreren zu betreibenden Fitnessstudio(s) (1) den Zugang für Benutzer und Personal an einem Eingang/Ausgang (8) freizugeben oder zu blockieren, die Beleuchtung zu steuern, die Heizungs- und Klimaanlagen zu steuern, die Trainingsgeräte ein- und auszuschalten und auf deren Steuerung zuzugreifen, Musik abzuspielen, Rollläden oder dergleichen zu steuern, sowie alle weiteren technischen Komponenten des jeweiligen Fitnessstudios zu steuern und zu überwachen, wobei der Kommunikationsbereich die Kommunikation in Echtzeit über Bild und Ton zwischen der Betreuungsperson in der Fernbetreuungszentrale und einem beliebigen Benutzer in einem der zu betreibenden Fitnessstudios (1) über ein Smartphone, Tablett und/oder VR-Devices und/oder AR-Devices eines Benutzers und/oder ein Kommunikationsterminal (6.1, 6.2, 6.3) erlaubt, wobei die zu betreibenden Fitnessstudios (1) Videokameras (K), Lautsprecher (L), Mikrofone, Kommunikationsterminals (6.1, 6.2, 6.3), Bildschirme (T), Lichtsteuerungen, Türsteuerungen, Heizungs- und Klimasteuerungen, Belüftungssteuerungen, und Alarm- und Sicherheitssysteme aufweisen, die über das Internet mit den jeweiligen Fernbetreuungszentralen (10) verbunden sind und von dort steuerbar sind, wobei das Kommunikationsterminal (6.1, 6.2, 6.3) eingerichtet ist, eine Kommunikation mit einem Livecoach herzustellen und gleichzeitig als Empfang dient und im Eingangsbereich des Fitnessstudios angeordnet ist, wobei das Kommunikationsterminal (6.1, 6.2, 6.3) einen Bildschirm mit Touchfunktion, Lautsprecher, Mikrofone und eine Kamera aufweist, wobei mehrere Kommunikationsterminals (6.1, 6.2, 6.3) in dem selben Fitnessstudio oder mehreren Fitnessstudio anordnebar sind und mit der selben Fernbetreuungszentrale (10) verbunden sind .

2. Fitnessstudio (1) nach Anspruch 1, **dadurch gekennzeichnet, dass** die Fernbetreuungszentrale (10) in einem abgetrennten Raum des Fitnessstudios (1), oder an einem anderen Ort eingerichtet ist.

3. Fitnessstudio (1) nach Anspruch 1, **dadurch gekennzeichnet, dass** eine in einem jeweiligen Fitnessstudio (1) anwesende Person mit einem Smartphone oder einem Tablett einen dort platzierten QR-Codes ausliest, um mit einer Betreuungsperson in einer Fernbetreuungszentrale (10) über eine Anruffunktion zu kommunizieren, wobei eine Web-App geöffnet wird, die nicht auf dem Smartphone zu installieren ist.

4. Fitnessstudio (1) nach Anspruch 1 und 6, **dadurch gekennzeichnet, dass** eine Notruftaste vorhanden ist, welche Alarmmeldungen an die jeweiligen Notdienste und in die Fernbetreuungszentrale sowie einen Alarmton über die Lautsprecher ausgibt, wobei eine Notfallmeldung auch auf den Bildschirmen im Fitnessstudio (1) visualisiert werden.

5. Fitnessstudio (1) nach Anspruch 2, **dadurch gekennzeichnet, dass** die Software der Betreuungsperson in der Fernbetreuungszentrale (10) anzeigt, wie viele und welche weiteren Fitnessstudios (1) und denen Fernbetreuungszentralen (10) online sind, wie viele und welche Benutzer sich in den jeweiligen Fitnessstudios (1) befinden und welche Hardware in den jeweiligen Fitnessstudios (1) online und bedienbar ist.

6. Fitnessstudio (1) nach Anspruch 2, **dadurch gekennzeichnet, dass** der Überwachungsbereich der Fernbetreuungszentrale (10) Laptops und/oder Tablets und/oder Smartphones und/oder VR-Devices und/oder AR-Devices aufweist, die mit Videokameras (K) in den betriebenen Fitnessstudios verbunden sind, wobei Live-Videobeobachtungen in allen verbundenen Fitnessstudios (1) erfolgen, wobei eine automatische Erkennung von Bewegung und deren optische Kennzeichnung und Hervorhebung bei der Darstellung auf den Bildschirmen erfolgt und wobei nach Wunsch eine Aufzeichnung und Speicherung der live-Videobeobachtungen erfolgt.

7. Fitnessstudio (1) nach Anspruch 1 und 2, **dadurch gekennzeichnet, dass** die Fernbetreuungszentrale (10) ein Laptop, ein Tablet oder ein anderer mobiler Rechner mit Anzeigevorrichtung und der Software ist.

8. Fitnessstudio (1) nach Anspruch 2, **dadurch gekennzeichnet, dass** die Software der Fernbetreuungszentrale (10) Zugriff auf personenbezogene Daten von Benutzern in den Fitnessstudios mittels Schnittstelle von deren Geräten ausliest und der Betreuungsperson anzeigt.
